# EUROPÄISCHE PATENTSCHRIFT

(11) **EP 2 093 854 B1**
(45) Veröffentlichungstag und Bekanntmachung des Hinweises auf die Patenterteilung: **15.03.2017**
(21) Anmeldenummer: 09151669.0
(22) Anmeldetag: 29.01.2009
(51) Int. Cl.: H02J 1/10, H02J 9/06

(54) **Verfahren zum Betrieb von einem Gerät mit redundanten Netzteilen sowie Stromversorgungseinheit mit redundanten Netzteilen**
Method for operating one device with redundant power supplies and electricity supply unit with redundant power supplies
Procédé de fonctionnement d'un appareil ayant des parties de réseaux redondantes et unité d'alimentation en courant dotée de parties de réseaux redondantes

(30) Priorität: 20.02.2008 DE 102008010043
(43) Veröffentlichungstag der Anmeldung: 26.08.2009
(73) Patentinhaber: Fujitsu Technology Solutions Intellectual Property GmbH, 80807 München (DE)
(72) Erfinder: Draeger, Markus, 82319, Starnberg (DE)
(74) Vertreter: Epping - Hermann - Fischer

(56) Entgegenhaltungen:
- DE-A1- 3 442 374
- US-A1- 2004 004 402

## Beschreibung

Die Erfindung betrifft ein Verfahren zum Betrieb eines Geräts mit redundanten Netzteilen sowie eine Stromversorgungseinheit mit redundanten Netzteilen.

Bei vielen Geräten, wie beispielsweise Computern, sind redundante Stromversorgungen vorgesehen. Unter einer redundanten Versorgung versteht man dabei das Vorhandensein zweier funktional gleicher oder vergleichbarer Netzteile, die im Normalfall nicht gleichzeitig benötigt werden. Die redundante Stromversorgung ist dafür ausgelegt, dass auch bei Ausfall eines der beiden Netzteile ein unterbrechungsfreier Betrieb des Geräts gewährleistet werden kann.

Die Netzteile sind dabei häufig so ausgelegt, dass ein einzelnes Netzteil die elektrische Spitzenlast des Systems liefern kann.

Dies führt dazu, dass bei gleichzeitigem Betrieb die beiden Netzteile mit einer jeweiligen Ausleistung von maximal 50% betrieben werden. Da Netzteile jedoch eine bestimmte Effizienz haben, die üblicherweise mit geringer werdender elektronischer Last abnimmt, ist dieser Betriebsmodus sehr ungünstig für den Energieverbrauch des Gesamtsystems.

Diese geringe Effizient kann vermieden werden, indem eines der beiden Netzteile während des Betriebs des zweiten Netzteils vollständig abgeschaltet ist, also im so genannten "cold stand-by" Modus gehalten wird. Bei Ausfall des sich im Betrieb befindlichen Netzteils muss dabei schnell genug auf das Ersatznetzteil umgeschaltet werden, um einen unterbrechungsfreien Betrieb zu sichern. Dafür muss eine geeignete elektronische Schaltung vorhanden sein, die zwischen dem abgeschalteten und dem sich in Betrieb befindlichen Netzteil möglichst schnell umschalten kann. Zudem benötigt man Netzteile, die für einen solchen Betrieb, der ein schnelles Umschalten vorsieht, geeignet sein müssen. Der Nachteil dieser Betriebsweise ist, dass es hierbei zu unterschiedlich langen Betriebszeiten der zwei Netzteile kommt, da ein Umschalten nur bei dem Ausfall des sich in Betrieb befindlichen Netzteils vorgesehen ist. Dies führt zur einer unterschiedlicher Alterung auf Grund der ungleichen Abnutzung der zwei Netzteile und damit zu einer Gefährdung der Betriebssicherheit des Geräts.

Aus der DE 3442374 A1 ist eine redundante Stromversorgungsanlage für Eisenbahnsicherungsanlagen mit zwei im Parallelbetrieb auf denselben Ausgang Energie abgebenden, auf eine vorgegebene Ausgangsspannung geregelten Aggregaten bekannt, von denen jedes beim Ausfallen eines der beiden Aggregate die volle Last übernehmen kann. Beim ersten Aggregat wird als Regelgröße die Ausgangsspannung unmittelbar und beim zweiten Aggregat die periodisch um vorgegebene Beträge erhöhte und erniedrigte Ausgangsspannung zugeführt. An dem Ausgang sind zwei Schwellwertdiskriminatoren angeschlossen, deren Schaltschwellen um einen vorgegebenen Spannungswert unter- bzw. oberhalb der Ausgangsspannung liegen und deren Ausgänge mit einer logischen Schaltung verbunden sind zur Bewertung von zugeführten Signalen in Abhängigkeit vom einen bzw. anderen Wert der dem zweiten Aggregat zugeführten Regelgröße. Problematisch an dem beschriebenen Ansatz ist, dass stets beide Aggregate mit einem Stromnetz verbunden sind und somit zum Energieverbrauch der Stromversorgungsanlage beitragen.

Aufgabe der Erfindung ist es ein Verfahren für den Betrieb eines Geräts mit wenigstens zwei Netzteilen zu beschreiben, mit dem der unterbrechungsfreie Betrieb des Geräts sichergestellt werden kann, wobei der Energieverbrauch des Geräts niedrig gehalten und eine gleichmäßige Alterung der wenigstens zwei Netzteile gewährleistet sein soll.

Die Aufgabe wird erfindungsgemäß durch ein Verfahren gemäß Anspruch 1 gelöst. Das Verfahren stellt den unterbrechungsfreien Betrieb eines Geräts, das wenigstens zwei Netzteile aufweist, durch einem alternierenden Betrieb der wenigstens zwei Netzteile sicher. Durch ein abwechselndes Umschalten zwischen den wenigstens zwei Netzteilen, sofern deren Funktionsfähigkeit gegeben ist, kann der störungsfreie Betriebsablauf des Systems gewährleistet werden. Bei dem alternierende Betrieb trägt jeweils das sich im Betrieb befindende Netzteil zur Stromversorgung des Geräts bei, während das sich nicht in Betrieb befindende Netzteil von seiner Stromversorgung getrennt ist. Fällt das sich gerade in Betrieb befindende Netzteil plötzlich aus, wird ein sofortiges Umschalten, bei dem auf eine Überprüfung der Funktionsfähigkeit des in Betrieb zu nehmenden Netzteils verzichtet werden kann, eingeleitet.

Die Erfindung macht sich dabei ein Verfahren zu Nutze, das bei dem planmäßigen Wechseln zwischen den wenigstens zwei Netzteilen eine regelmäßige Überprüfung der Funktionsbereitschaft des sich nicht in Betrieb befindlichen Netzteils vorsieht, was einem plötzlichen Ausfall eines der beiden Netzteile durch zu starke Abnutzung bzw. Alterung entgegenwirkt. Nach einer bestimmten Betriebszeit können durch den stetigen Betriebswechsel alle zur Stromversorgung genutzten Netzteile nacheinander ausgetauscht und damit ein weiterhin reibungsloser Betriebsablauf des Geräts gesichert werden.

In einer weiteren bevorzugten Durchführung der Erfindung wird bei jedem Einschaltvorgang zwischen den wenigstens zwei Netzteilen umgeschaltet.

In einer weiteren bevorzugten Durchführung der Erfindung wird nach dem Erreichen einer bestimmten Zeit zwischen den wenigstens zwei Netzteilen umgeschaltet, was einen Ausfall eines der wenigstens zwei Netzteile auf Grund von Abnutzung durch zu lange Inbetriebnahme verhindert.

Die Aufgabe wird erfindungsgemäß weiterhin durch eine Stromversorgungseinheit mit redundanten Netzteilen gelöst, die dazu eingerichtet ist, eines der vorstehend beschriebenen Verfahren auszuführen.

Weitere Einzelheiten und Ausgestaltungen der Erfindung sind in den jeweiligen abhängigen Ansprüchen angegeben.

Die Erfindung wird nachfolgend an einem Ausführungsbeispiel anhand der Zeichnungen näher erläutert.

In den Zeichnungen zeigt:
- Figur 1: ein Ablaufdiagram für ein Verfahren zum alternierenden Betrieb von zwei Netzteilen,
- Figur 2: eine schematische Darstellung eines Geräts mit einer redundanten Stromversorgung aus zwei Netzteilen sowie eine elektronische Schaltung.

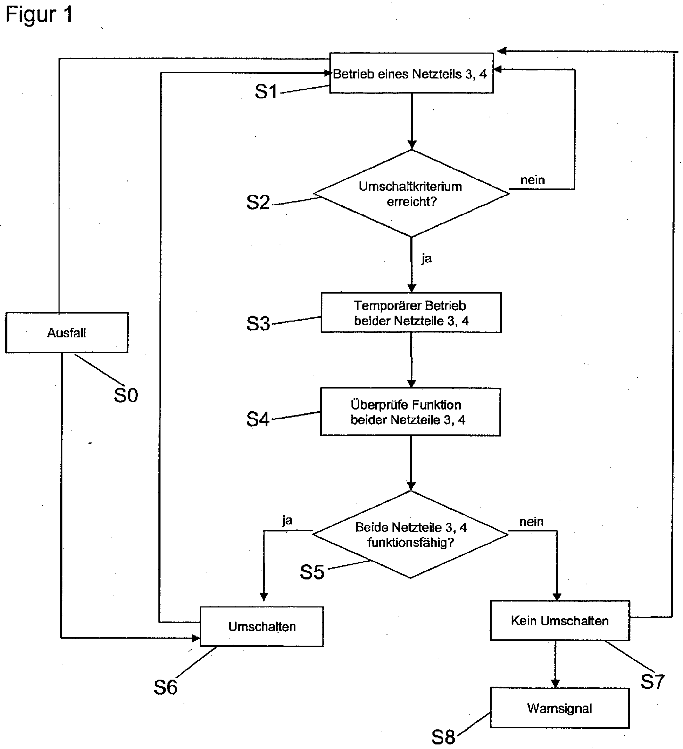

Figur 1 zeigt ein Ablaufdiagram für ein Verfahren zur alternierenden Inbetriebnahme von zwei Netzteilen, wobei vor jedem Umschalten die Funktionsfähigkeit der Netzteile überprüft wird.

Schritt S1 sieht dabei - ausgehend von einem Gerät 1 mit zwei Netzteilen 2, 3 - den Betrieb eines der beiden Netzteile 2 oder 3 vor, während das zweite nicht zur Stromversorgung des Geräts 1 beiträgt.

In Schritt S2 wird überprüft ob ein Kriterium zum Umschalten zwischen den beiden Netzteilen 2, 3 erreicht ist. Mögliche Umschaltkriterien sind hierbei ein neues Einschalten des Geräts 1, oder das Erreichen einer bestimmten Temperatur oder Betriebszeit des sich in Betrieb befindlichen Netzteils 2 oder 3.

Ist eines der vorgesehenen Umschaltkriterien erreicht, ist in Schritt S3 kurzzeitig der Betrieb beider Netzteile 2, 3 vorgesehen, um sicherstellen zu können, dass beide Netzteile 2, 3 ordnungsgemäß funktionieren.

Schritt S4 sieht im Folgenden die Überprüfung der zwei Netzteile 2, 3 vor. Dies kann beispielsweise durch Messen einer Ausgangsspannung der Netzteile 3,4 getestet werden.

In Schritt S5 erfolgt eine Abfrage, ob beide Netzteile 2, 3 funktionsfähig sind.

Ist die Funktionalität beider Netzteile 2, 3 gesichert, sieht Schritt S6 das Umschalten zwischen den beiden Netzteilen 2, 3 vor. Fällt die Abfrage in Schritt S5 negativ aus und das zweite Netzteil 2 oder 3, das sich vorher nicht in Betrieb befunden hat, ist nicht funktionsfähig, erfolgt kein Umschalten zwischen den zwei Netzteilen 2, 3, was durch Schritt S7 gegeben ist. In diesem Fall ist wieder ein alleiniger Betrieb des vorher in Betrieb gestandenen Netzteils 2 oder 3 vorgesehen. Das defekte zweite Netzteil 2 oder 3 wird wieder von seiner Spannungsversorgung getrennt und kann repariert oder ausgetauscht werden. So kann ein unterbrechungsfreier Betrieb des Geräts gesichert werden.

Zudem ist im Falle der Funktionsunfähigkeit eines der beiden Netzteile 2, 3 das Ausgeben eines Warnsignals vorgesehen, wie in Schritt S8 dargestellt ist.
Dies garantiert, dass die Funktionalität der Netzteile 2, 3 leicht überprüfbar gehalten werden kann.

Fällt das sich gerade in Betrieb befindende Netzteil 2, 3 plötzlich aus, so wird umgehend - unter Wegfallen der Schritte S2-S8 - zwischen den beiden Netzteilen 2, 3 umgeschaltet, wie in Schritt S0 dargestellt. Dabei bedeutet umgehend, dass das Umschalten so schnell vorgenommen wird, dass die Stromversorgung des Geräts 1 nicht beeinträchtigt und dessen unterbrechungsfreier Betrieb weiter sichergestellt ist. In diesem Fall wird sowohl auf den kurzeitigen parallelen Betrieb der Netzteile 2, 3 (Schritt S3) als auch auf die Funktionsüberprüfung des in Betrieb zu nehmenden Netzteils 2 oder 3 durch Schritt S5 gänzlich verzichtet, um den unterbrechungsfreien Betrieb des Systems sicherzustellen. Das ausgefallene Netzteil 2 oder 3 kann daraufhin ausgetauscht oder repariert werden und der alternierende Betrieb der zwei Netzteile 2, 3 danach wieder aufgenommen werden.

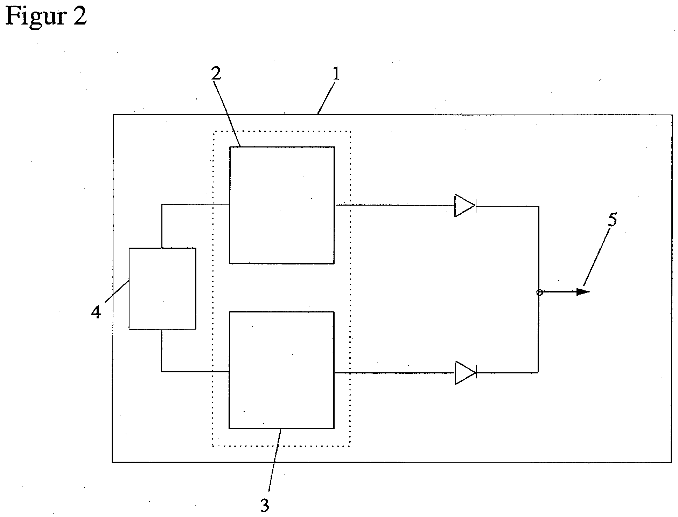

Figur 2 zeigt eine Anordnung aus einem Gerät 1, welches eine redundante Stromversorgungseinheit aus zwei Netzteilen 2, 3 aufweist. Die redundante Versorgung wird dabei durch die gestrichelte Box um die beiden Netzteile 2, 3 in Figur 2 angedeutet. Eine elektronische Schaltung 4 ist vorgesehen, um zwischen den zwei Netzteilen 2, 3 umschalten zu können.

Als Gerät 1 ist ein Computersystem, wie beispielsweise ein üblicher Personalcomputer (PC) oder auch ein Server, möglich. Auch medizinische Geräte, oder andere Geräte die Hochverfügbarkeit voraussetzen, sind vorstellbar.
Als redundante Stromversorgungseinheit können dabei nicht nur zwei, sondern auch mehrere Netzteile 2, 3 vorgesehen sein. Ebenso können zwei Netzteile in einem Gehäuse, an dem alle wesentlichen Komponenten in doppelter Ausführung vorhanden sind, als redundante Stromversorgungseinheit eingesetzt werden.

Die Schaltung 4 ist dazu vorgesehen, um zwischen den Netzeilen 2, 3 umzuschalten und einen alternierender Betrieb der Netzteile 2, 3 zu sichern. Schaltung 4 ermöglicht dabei auch einen kurzeitigen parallelen Betrieb der Netzteile 2, 3 um die Funktionalität beider Netzteile 2, 3 testen zu können. Des weiteren ist Schaltung 4 dazu eingerichtet, das sich gerade nicht in Betrieb befindliche Netzteil 2 oder 3 von seiner Spannungsversorgung zu trennen, bevorzugt so, dass keine Leistung aufgenommen wird.

Für die zum Umschalten zwischen den wenigstens zwei Netzteilen 2, 3 vorgesehene elektronische Schaltung 4 ist beispielsweise eine Triacanordnung aus Thyristoren möglich.

Eine mögliche Realisierung von Schaltung 4 wäre aber auch eine Anordnung aus Transistoren als schaltendes Element.

Auch eine elektromechanische Vorrichtung mit einem Relais als Schaltelement ist vorstellbar.

Die Überprüfung der Funktionsfähigkeit der Netzteile 2, 3 kann durch Messung einer Ausgangsspannung erreicht werden, die mit einem vorgegebenen Referenzwert verglichen wird.

Um zu Verhindern, dass sich die Netzteile 2, 3 gegenseitig kurzschließen, kann - wie in Figur 2 angedeutet - der Einsatz von Dioden vorgesehen werden.

Das Umschalten zwischen den wenigstens zwei Netzteilen 2, 3 kann nach verschiedenen Kriterien erfolgen, wie beispielsweise bei jedem Einschaltvorgang des Geräts 1, oder nach Erreichen einer bestimmten Betriebszeit des Netzteils 2 oder 3. Als Umschaltkriterium können auch bestimmte Betriebsbedingungen der zwei Netzteile 2, 3 vorgesehen werden, wie zum Beispiel das Erreichen einer bestimmten Temperatur des sich in Betrieb befindlichen Netzteils 2 oder 3. Die Temperatur kann dabei mit Hilfe von Messsensoren bestimmt werden. Mögliche andere Betriebsbedingungen wären das Unterschreiten einer vorbestimmten Mindestlüfterdrehzahl oder die Spannungsstabilität des gerade betriebenen Netzteils 2 oder 3. Das Überwachen von Temperatur und Lüfterdrehzahl der Netzteile 2, 3 dient beispielsweise dazu eine mögliche Überhitzung der Netzteile 2, 3 und somit deren potentiellen Ausfall frühzeitig zu erkennen und rechtzeitig Gegenmaßnahmen (wie ein sofortiges Umschalten zwischen den beiden Netzteilen 2, 3 und darauf folgend ein Austauschen des betroffenen Lüfters bzw. Netzteils 2, 3) ergreifen zu können.

Die einzelnen Umschaltkriterien schließen sich dabei nicht gegenseitig aus. Auch eine Kombination aus verschiedenen Kriterien, wie beispielsweise ein Umschalten nach Erreichen einer bestimmten Betriebszeit und auch bei jedem Bootvorgang - wie es zum Beispiel bei dem Betrieb von Servern Anwendung finden könnte - ist somit vorstellbar.

Auch eine zu Wartungs- oder Reparaturzwecken nötige Umschaltung des Betriebs, beispielsweise durch manuelles Betätigen eines Schaltknopfs, der in Schaltung 4 vorgesehen sein kann, oder eine über ein Interface erfolgte Programmierung von Schaltung 4 ist jederzeit gewährleistet.

Das regelmäßige Umschalten zwischen den wenigstens zwei Netzteilen 2, 3 garantiert gleiche Betriebszeiten der Netzteile 2, 3, wodurch deren gleichmäßige Aus- und Abnutzung erreicht und damit die Betriebssicherheit des Geräts 1 garantiert werden.

Durch Schalten von jeweils nur einem der wenigstens zwei Netzteile 2, 3 kann weiterhin eine gute Auslastung des sich in Betrieb befindlichen Netzteils 2 oder 3 sichergestellt werden und somit der Energieverbrauch des Geräts 1 gesenkt werden.

### Bezugszeichenliste

- 1: Gerät
- 2, 3: Netzteil
- 4: Schaltung
- 5: Zum Gerät

## Patentansprüche

1. Verfahren zum Betrieb eines Geräts durch wenigstens zwei Netzteile (2, 3), **dadurch gekennzeichnet dass**,
- ein alternierender Betrieb der wenigstens zwei Netzteile (2, 3) durch Umschalten zwischen den beiden Netzteilen (2, 3) vorgesehen ist, falls die Funktionsfähigkeit von beiden Netzteilen (2, 3) gegeben ist, wobei bei dem alternierenden Betrieb das sich in Betrieb befindende Netzteil (2 oder 3) zur Stromversorgung des Geräts beiträgt und das sich nicht in Betrieb befindende Netzteil (3 oder 2) von seiner Stromversorgung getrennt ist;
- ein sofortiges Umschalten zwischen den wenigstens zwei Netzteilen (2, 3) beim Ausfall des sich gerade in Betrieb befindenden Netzteils (2 oder 3) vorgesehen ist; und
bei dem alternierenden Betrieb der wenigstens zwei Netzteile (2, 3) ein kurzeitiger paralleler Betrieb der Netzteile (2, 3) vorgesehen ist, um die Funktionstüchtigkeit des Netzteils (2 oder 3), das in Betrieb genommen werden soll, überprüfen zu können.

2. Verfahren nach Anspruch 1, **dadurch gekennzeichnet dass**, die Überprüfung der Funktionstüchtigkeit der wenigstens zwei Netzteile (2, 3) durch Überwachen einer Ausgangsspannung vorgesehen ist.

3. Verfahren nach einem der Ansprüche 1 bis 2, **dadurch gekennzeichnet dass**,
im Falle der Funktionsunfähigkeit eines der wenigstens zwei Netzteile (2, 3) ein Warnsignal abgegeben wird.

4. Verfahren nach einem der Ansprüche 1 bis 3, **dadurch gekennzeichnet dass**,
der Umschaltvorgang im alternierenden Betrieb bei Erreichen von bestimmten Umschaltkriterien vorgesehen ist.

5. Verfahren nach Anspruch 4, **dadurch gekennzeichnet, dass** als Umschaltkriterium zum Umschalten zwischen den wenigstens zwei Netzteilen (2, 3) ein neuer Einschaltvorgang des Geräts vorgesehen ist.

6. Verfahren nach Anspruch 4, **dadurch gekennzeichnet, dass** als Umschaltkriterium das Erreichen einer bestimmten Zeit, während der sich eines der beiden Netzteile (2 oder 3) in Betrieb befindet, vorgesehen ist.

7. Verfahren nach Anspruch 4, **dadurch gekennzeichnet, dass** als Umschaltkriterium das Erreichen von bestimmten Betriebsbedingungen des gerade betriebenen Netzteils (2) oder (3) vorgesehen ist.

8. Verfahren nach Anspruch 7, **dadurch gekennzeichnet, dass** als Umschaltkriterium das Erreichen einer bestimmten Temperatur des gerade betriebenen Netzteils (2 oder 3) vorgesehen ist.

9. Stromversorgungseinheit mit redundanten Netzteilen (2, 3) zur Stromversorgung eines Geräts (1) **dadurch gekennzeichnet, dass**
die Stromversorgungseinheit dazu eingerichtet ist, ein Verfahren nach einem der Ansprüche 1 bis 8 durchzuführen.

10. Stromversorgungseinheit nach Anspruch 9, **dadurch gekennzeichnet, dass**
eine elektronische Schaltung(4) Schaltung (4) zum Umschalten zwischen den wenigstens zwei Netzteilen (2, 3) vorgesehen ist.

11. Stromversorgungseinheit nach Anspruch 10, **dadurch gekennzeichnet, dass**
die elektronische Schaltung (4) ein Triac oder ein Relais als schaltendes Element beinhaltet.

12. Stromversorgungseinheit nach einem der Ansprüche 10 oder 11, **dadurch gekennzeichnet, dass**
die Schaltung (4) ein manuelles Umschalten zwischen den wenigstens zwei Netzteilen (2, 3) ermöglicht.

13. Verwendung der Stromversorgungseinheit nach einem der Ansprüche 9 bis 12 zur Versorgung eines Computersystems als Gerät (1) .

## Claims

1. Method for operating a device by at least two power supply units (2, 3), **characterized in that**
- an alternating operation of the at least two power supply units (2, 3) by switching-over between the at least two power supply units (2, 3) is provided, if the two power supply units (2, 3) are functional, wherein during the alternating operation, the power supply unit (2, 3) that is in operation contributes to the power supply of the device, and the power supply unit (3 or 2) not in operation is cut-off from the power supply thereof;
- an immediate switchover between the at least two power supply units (2, 3) in case of a failure of the power supply unit (2 or 3) that is in operation is provided; and
in the alternating operation of the at least two power supply units (2, 3), a short-term parallel operation of the power supply units (2, 3) is provided in order to be able to check the availability for use of the power supply unit (2 or 3) that is to be operated.

2. Method according to claim 1, **characterized in that** checking the availability for use of the at least two power supply units (2, 3) is provided for by monitoring an output voltage.

3. Method according to one of claims 1 to 2, **characterized in that**
a warning signal is output if one of the at least two power supply units (2, 3) is not able to operate.

4. Method according to one of claims 1 to 3, **characterized in that**
the switchover operation in the alternating operation is provided upon attaining certain switchover criteria.

5. Method according to claim 4, **characterized in that** a new startup operation of the device is provided as the switchover criterion for switching over between the at least two power supply units (2, 3).

6. Method according to claim 4, **characterized in that** an elapse of a certain time of operation of one of the two power supply units (2 or 3) is provided as the switchover criterion.

7. Method according to claim 4, **characterized in that** attaining certain operating conditions of the currently operated power supply unit (2) or (3) is provided as the switchover criterion.

8. Method according to claim 7, **characterized in that** reaching a certain temperature of the currently operated power supply unit (2) or (3) is provided as the switchover criterion.

9. Power supply apparatus with redundant power supply units (2, 3) for the power supply of a device (1), **characterized in that**
the power supply unit is configured to perform a method according to one of claims 1 to 8.

10. Power supply apparatus according to claim 9, **characterized in that**
an electronic circuit (4) for switching between the at least two power supply units (2, 3) is provided.

11. Power supply unit according to claim 10, **characterized in that**
the electronic circuit (4) includes a triac or a relay as the switching element.

12. Power supply apparatus according to one of claims 10 or 11, **characterized in that**
the circuit (4) makes possible a manual switching between the at least two power supply units (2, 3).

13. Use of the power supply unit according to one of claims 9 to 12 for supplying a computer system as a device (1).

## Revendications

1. Procédé de fonctionnement d'un appareil par au moins deux
sources d'alimentation (2, 3) **caractérisé en ce que**
- un fonctionnement alterné des au moins deux sources d'alimentation (2, 3) est prévu par commutation entre les deux sources d'alimentation (2, 3), si la capacité fonctionnelle des deux sources d'alimentation (2, 3) est donnée, dans lequel, dans le fonctionnement alterné, la source d'alimentation (2 ou 3) se trouvant en fonctionnement contribue à l'alimentation de l'appareil et la source d'alimentation (2 ou 3) ne se trouvant pas en fonctionnement est coupée de son alimentation ;
- une commutation immédiate entre les au moins deux sources d'alimentation (2, 3) est prévue en cas de panne de la source d'alimentation (2 ou 3) se trouvant justement en fonctionnement et en cas de fonctionnement alterné des au moins deux sources d'alimentation (2, 3), un fonctionnement en parallèle de courte durée des sources d'alimentation (2, 3) est prévu afin de pouvoir contrôler la fonctionnalité de la source d'alimentation (2 ou 3) devant entrer en fonctionnement.

2. Procédé selon la revendication 1, **caractérisé en ce que** le contrôle de la fonctionnalité des au moins deux sources d'alimentation (2, 3) est prévu au moyen d'une surveillance d'une tension de sortie.

3. Procédé selon l'une quelconque des revendications 1 à 2, **caractérisé en ce qu'**en cas d'incapacité fonctionnelle d'une des au moins deux sources d'alimentation (2, 3) un signal d'avertissement est émis.

4. Procédé selon l'une quelconque des revendications 1 à 3, **caractérisé en ce que** le processus de commutation en fonctionnement alterné est prévue en cas d'atteinte des critères de commutation déterminés.

5. Procédé selon la revendication 4, **caractérisé en ce que** une nouvelle procédure de démarrage de l'appareil est prévue comme critère de commutation pour la commutation entre les au moins deux sources d'alimentation (2, 3).

6. Procédé selon la revendication 4 **caractérisé en ce que**, comme critère de commutation, l'atteinte d'un temps déterminé est prévue au cours duquel l'une des deux sources d'alimentation (2 ou 3) se trouve en fonctionnement.

7. Procédé selon la revendication 4 **caractérisé en ce que**, comme critère de commutation, l'atteinte de conditions de fonctionnement déterminées de la source d'alimentation (2) ou (3) justement en fonctionnement est prévue.

8. Procédé selon la revendication 7 **caractérisé en ce que**, comme critère de commutation, l'atteinte d'une température déterminée de la source d'alimentation (2) ou (3) justement en fonctionnement est prévue.

9. Unité d'alimentation de courant avec des sources d'alimentation (2, 3) redondantes pour alimenter en courant un appareil (1) **caractérisée en ce que** l'unité d'alimentation est adaptée à réaliser un procédé selon l'une quelconque des revendications 1 à 8.

10. Unité d'alimentation de courant selon la revendication 9, **caractérisée en ce qu'** un circuit électronique (4) est prévu pour commuter entre les au moins deux sources d'alimentation (2, 3).

11. Unité d'alimentation de courant selon la revendication 10, **caractérisée en ce qu'**un circuit électronique (4) contient un triac ou un relais comme élément commutant.

12. Unité d'alimentation de courant selon l'une quelconque des revendications 10 ou 11, **caractérisée en ce que** le circuit (4) permet une commutation manuelle entre les au moins deux sources d'alimentation (2, 3).

13. Utilisation de l'unité d'alimentation de courant selon l'une quelconque des revendications 9 à 12 destinée à alimenter, un système informatique comme appareil (1).
